(19) Europäisches Patentamt
European Patent Office
Office européen des brevets

(11) **EP 2 051 045 A2**

(12) **EUROPÄISCHE PATENTANMELDUNG**

(43) Veröffentlichungstag:
**22.04.2009 Patentblatt 2009/17**

(51) Int Cl.:
*G01D 5/22* *(2006.01)*

(21) Anmeldenummer: **08017609.2**

(22) Anmeldetag: **08.10.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **18.10.2007 DE 102007049978**

(71) Anmelder: **KNORR-BREMSE Systeme für Nutzfahrzeuge GmbH**
**80809 München (DE)**

(72) Erfinder: **Feucht, Thomas**
**71299 Wimsheim (DE)**

(74) Vertreter: **Schönmann, Kurt**
**Knorr-Bremse AG**
**Moosacher Strasse 80**
**80809 München (DE)**

(54) **Differenzialtauchankeraufnehmer aus Metallen unterschiedlicher magnetischer Permeabilität**

(57) Die Erfindung betrifft einen Differenzial-tauchankeraufnehmer (1) beinhaltend wenigstens zwei elektrische, mit Windungen versehene Spulen (2, 4) sowie wenigstens einen mit diesen zusammenwirkenden Tauchanker (6), welcher abhängig von seiner Eintauchtiefe in koaxiale Spulenöffnungen (8, 10) der Spulen (2, 4) eine unterschiedliche Induktivität (L) der Spulen (2, 4) hervorruft.

Die Erfindung sieht vor, dass ein radial äußerer Abschnitt (22) des Tauchankers (6) wenigstens teilweise aus einem ferromagnetischen Material und ein weiterer Abschnitt (24) des Tauchankers (6) wenigstens teilweise aus einem elektrisch leitfähigen Nichteisenmetall besteht, wobei sich der weitere Abschnitt (24) in axialer Richtung wenigstens über den gesamten, mit den Spulen (2, 4) zusammenwirkenden Bereich des Tauchankers (6) erstreckt und die axiale Länge des radial äußeren Abschnitts (22) des Tauchankers (6) derart gewählt ist, dass Stellungen des Tauchankers (6) existieren, in welchen der radial äußere Abschnitt (22) des Tauchankers (6) sich mit der gesamten axialen Länge der Spulenöffnung (8) der einen Spule (2), jedoch noch nicht oder nur teilweise mit der axialen Länge der Spulenöffnung (10) der anderen Spule (4) überdeckt.

Fig.1:

**Beschreibung**

Stand der Technik

Die Erfindung geht aus von einem Differenzialtauchankeraufnehmer beinhaltend wenigstens zwei elektrische, mit Windungen versehene Spulen sowie wenigstens einen mit diesen zusammenwirkenden Tauchanker, welcher abhängig von seiner Eintauchtiefe in koaxiale Spulenöffnungen der Spulen eine unterschiedliche Induktivität der Spulen hervorruft, gemäß dem Oberbegriff von Anspruch 1.

Bekannte Differenzialtauchankeraufnehmer werden beispielsweise in elektronischen Pedalmoduln von Kraftfahrzeugen verwendet und dienen zum Messen der Pedalbewegung eines Pedals wie eines Gaspedals. Je nach Eintauchtiefe des Tauchankers in die Spulenöffnungen bzw. dem Überdeckungsgrad zwischen den Spulen und dem Tauchanker ändert sich der magnetische Widerstand des magnetischen Kreises und damit die Eigeninduktivitäten der Spulen.

Aus dem Taschenbuch der Messtechnik, Carl Hanser Verlag 1998, Kapitel 3.8.1.2 ist ein gattungsgemäßer Differenzialtauchankeraufnehmer bekannt, welcher nach dem in Kapitel 4.1.2.2. beschriebenen Differenzialprinzip arbeitet. Dabei werden die Spulen des Differenzialtauchankeraufnehmers in einer Differenzialanordnung verschaltet, um Störgrößen zu kompensieren. Eine Messgrößenänderung in Form einer Änderung der jeweiligen Spuleninduktivität wirkt sich dabei gegensinnig aus, d.h. in den Spulen werden abhängig von der Eintauchtiefe des Tauchankers in die jeweilige Spulenöffnung gegenläufige Induktivitätsänderungen erzeugt.

Für die verschiedenen Anwendungen wie beispielsweise in einem Pedalmodul eines Nutzfahrzeugs werden leichte, kompakte und eine hohe Messempfindlichkeit aufweisende Differenzieltauchankeraufnehmer bevorzugt. Der vorliegenden Erfindung liegt daher die Aufgabe zugrunde, einen Differenzialtauchankeraufnehmer zu schaffen, der alle diese Eigenschaften aufweist.

Diese Aufgabe wird erfindungsgemäß durch die Merkmale von Anspruch 1 gelöst.

Vorteile der Erfindung

Die Erfindung basiert auf dem Gedanken, dass gemäß einer ersten Alternative ein radial äußerer Abschnitt des Tauchankers wenigstens teilweise aus einem ferromagnetischen Material und ein weiterer Abschnitt des Tauchankers wenigstens teilweise aus einem elektrisch leitfähigen Nichteisenmetall besteht.

Gemäß einer zweiten Alternative besteht ein radial äußerer Abschnitt des Tauchankers wenigstens teilweise aus einem elektrisch leitfähigen Nichteisenmetall und ein weiterer Abschnitt des Tauchankers wenigstens teilweise aus einem ferromagnetischen Material.

In beiden Fällen erstreckt sich der weitere Abschnitt in axialer Richtung wenigstens über den gesamten, mit den Spulen zusammenwirkenden Bereich des Tauchankers und die axiale Länge des radial äußeren Abschnitts des Tauchankers ist derart gewählt, dass Stellungen des Tauchankers existieren, in welchen der radial äußere Abschnitt des Tauchankers sich mit der gesamten axialen Länge der Spulenöffnung der einen Spule, jedoch noch nicht oder nur teilweise mit der axialen Länge der Spulenöffnung der anderen Spule überdeckt.

Wenn sich bei der Ausführung gemäß der ersten Alternative der aus dem ferromagnetischen Material bestehende radial äußere Abschnitt des Tauchankers in der Spulenöffnung bzw. im Bereich des Magnetfelds der einen Spule, aber noch nicht oder nur teilweise in der Spulenöffnung der anderen Spule befindet, so verstärkt dieser äußere ferromagnetische Abschnitt das von der einen Spule erzeugte Magnetfeld, weil dies eine typische Eigenschaft ferromagnetischer Materialien ist, welche die Magnetfeldlinien ablenken und in sich konzentrieren. Insgesamt steigt daher die Eigeninduktivität L der einen Spule. Wegen seiner die Magnetfeldlinien der einen Spule konzentrierenden Eigenschaften schirmt der radial äußere ferromagnetische Abschnitt gleichzeitig den weiteren, an dieser Stelle radial inneren, aus elektrisch leitfähigem Nichteisenmetall bestehenden Abschnitt vom Magnetfeld der einen Spule ab, so dass durch das Magnetfeld der einen Spule allenfalls geringe Wirbelströme im Nichteisenmetall erzeugt werden. Diese relativ geringen Wirbelströme können wiederum ein nur geringes, dem Magnetfeld der einen Spule entgegengerichtetes Magnetfeld erzeugen, so dass das durch den radial äußeren ferromagnetischen Abschnitt des Tauchankers verstärkte Magnetfeld der einen Spule dadurch kaum geschwächt wird.

Da sich in dieser Stellung des Tauchankers andererseits der radial äußere ferromagnetische Abschnitt des Tauchankers noch nicht bzw. nur teilweise in der Spulenöffnung bzw. im Bereich des Magnetfelds der anderen Spule befindet, jedoch der weitere Abschnitt aus Nichteisenmetall, kann der radial äußere Abschnitt aus ferromagnetischem Material den weiteren Abschnitt aus Nichteisenmetall nicht vom Magnetfeld der anderen Spule abschirmen. Daher sorgen die durch das Magnetfeld der anderen Spule im Nichteisenmetall induzierten Wirbelströme für die Ausbildung eines dem Magnetfeld der anderen Spule entgegengerichteten Magnetfelds, welches das Magnetfeld der anderen Spule schwächt.

Somit wird bei der ersten Alternative in ein und derselben Stellung des erfindungsgemäßen Tauchankers das Magnetfeld der einen Spule gestärkt und dasjenige der anderen Spule geschwächt, so dass sich eine gegenüber dem Stand der Technik größere Differenz der Eigeninduktivitäten L der Spulen ergibt.

Wenn sich bei der Ausführung gemäß der zweiten Alternative der aus dem elektrisch leitfähigen Nichteisenmetall bestehende radial äußere Abschnitt des Tauchankers in der Spulenöffnung bzw. im Bereich des Magnetfelds der einen Spule, aber noch nicht oder nur teilweise in der Spulenöffnung der anderen Spule befindet, so schwächt dieser äußere Abschnitt aus Nichteisenmetall das von der einen Spule erzeugte Magnetfeld, weil dies eine typische Eigenschaft von Nichteisenmetallen mit hoher elektrischer Leitfähigkeit ist, in welchen durch das Magnetfeld der einen Spule bedingt Wirbelströme für die Ausbildung eines dem Magnetfeld der einen Spule entgegen gerichteten Magnetfelds induziert werden, welches das Magnetfeld der einen Spule schwächt. Insgesamt sinkt daher die Eigeninduktivität L der einen Spule.

Da sich in dieser Stellung des Tauchankers andererseits der radial äußere Abschnitt des Tauchankers aus Nichteisenmetall noch nicht bzw. nur teilweise in der Spulenöffnung bzw. im Bereich des Magnetfelds der anderen Spule befindet, jedoch der weitere Abschnitt aus ferromagnetischem Material, kann der radial äußere Abschnitt aus Nichteisenmetall das Magnetfeld der anderen Spule nicht schwächen. Hingegen verstärkt der sich in der Spulenöffnung der anderen Spule befindliche weitere Abschnitt aus ferromagnetischem Material das Magnetfeld der anderen Spule.

Somit wird bei der zweiten Alternative in ein und derselben Stellung des erfindungsgemäßen Tauchankers das Magnetfeld der einen Spule geschwächt und dasjenige der anderen Spule gestärkt, so dass sich auch hier eine gegenüber dem Stand der Technik größere Differenz der Eigeninduktivitäten der Spulen ergibt.

Diese größere Differenz in den Eigeninduktivitäten L der Spulen führt in Verbindung mit einer Signalauswertung nach dem Differenzialprinzip dazu, dass der erfindungsgemäße Differenzialtauchankeraufnehmer gegenüber Relativbewegungen zwischen dem Tauchanker und den Spulen in vorteilhafter Weise empfindlicher reagiert. Diese höhere Empfindlichkeit erlaubt eine kürzere Baugröße des Tauchankeraufnehmers, weil bereits geringe Relativbewegungen zwischen der Spule und dem Tauchanker eine ausreichende Signalauflösung liefern.

Weil nur ein Teil des Tauchankeraufnehmers aus einem schwereren ferromagnetischen Material, der andere aber weiterhin aus einem leichteren Nichteisenmetall wie beispielsweise Aluminium besteht, baut der erfindungsgemäße Tauchankeraufnehmer relativ leicht. Dies bringt gegenüber einem vollständig aus ferromagnetischen Material gefertigten Tauchanker Vorteile hinsichtlich des Gewichts, weshalb auch das dynamische Verhalten bei einer externen Schwingungsanregung besser ist. Außerdem ist Aluminium leicht bearbeitbar und korrosionsbeständig.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt ist das Nichteisenmetall paramagnetisch oder diamagnetisch, bei gleichzeitig hoher elektrischer Leitfähigkeit, um möglichst hohe Wirbelströme und damit ein möglichst großes magnetisches Gegenfeld zu erzeugen, das dem Magnetfeld der Spule entgegen wirkt. Bevorzugt wird das Nichteisenmetall durch Aluminium oder durch eine Aluminiumlegierung gebildet.

Gemäß einer Weiterbildung wird der radial äußere Abschnitt des Tauchankers durch wenigstens einen Ring gebildet, welcher einen Längsabschnitt einer radial äußeren Umfangsfläche des Tauchankers ausbildet.

Weiterhin können die Spulen separat oder zueinander in Reihe geschaltet und von einer oder mehreren Stromquellen gegensinnig oder gleichsinnig bestromt sein, so dass sie zumindest in ihren zugeordneten Spuleninnerräumen gegensinnige oder gleichsinnige Magnetfelder erzeugen, d.h. dass die Richtung der Magnetfeldlinien der Spulen wenigstens im Bereich der Spuleninnenräume gleichsinnig bzw. gleichgerichtet oder gegensinnig bzw. entgegengerichtet ist.

Nicht zuletzt besteht der radial äußere Abschnitt vollständig aus dem elektrisch leitfähigen Nichteisenmetall oder dem ferromagnetischen Material und der weitere Abschnitt vollständig aus dem elektrisch leitfähigen Nichteisenmetall oder dem ferromagnetischen Material.

Genaueres geht aus der folgenden Beschreibung von Ausführungsbeispielen hervor.

Zeichnungen

Nachstehend sind Ausführungsbeispiele der Erfindung in der Zeichnung dargestellt und in der nachfolgenden Beschreibung näher erläutert. In der Zeichnung zeigt

Fig.1    eine schematische Querschnittsansicht eines Differenzialtauchankeraufnehmers gemäß einer ersten Ausführungsform der Erfindung;

Fig.2    eine schematische Querschnittsansicht eines Differenzialtauchankeraufnehmers gemäß einer weiteren Ausführungsform der Erfindung.

Beschreibung der Ausführungsbeispiele

Eine Anwendung eines Differenzialtauchankeraufnehmers 1 gemäß der Erfindung besteht beispielsweise darin, bei einem elektronischen Pedalmodul eines Fahrzeugs den Pedalweg beispielsweise eines elektronischen Gaspedals zu messen. Dazu werden beispielsweise zwei Spulen 2, 4 des Differenzialtauchankeraufnehmers 1 mit einem Lagerbock des Pedalmoduls und ein Tauchanker 6 des Differenzialtauchankeraufnehmers 1 mit dem Gaspedal verbunden. Der vom Differenzialtauchankeraufnehmer 1 gemessene Weg des Tauchankers 6 stellt dann ein Maß für die Betätigung des Gaspedals dar.

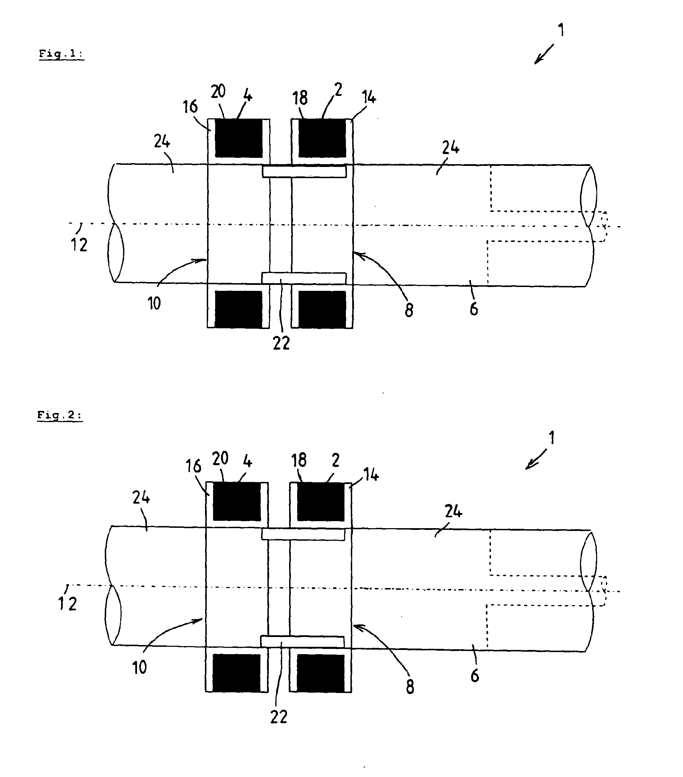

In Fig.1 ist zur beispielhaften Erläuterung der Erfindung ein Differenzialtauchankeraufnehmer 1 gemäß einer ersten Ausführungsform der Erfindung gezeigt. Der Differenzialtauchankeraufnehmer 1 dient zur Wandelung einer mechanischen Linearbewegung in ein elektrisches Signal, welches proportional zur Linearbewegung ist, im Rahmen eines berührungslosen induktiven Messverfahrens.

Hierzu beinhaltet der Differenzialtauchankeraufnehmer 1 wenigstens zwei jeweils mit elektrisch leitfähigen Windungen versehene, bevorzugt hohlzylindrische Spulen 2, 4 sowie den in die koaxialen Spulenöffnungen 8, 10 der Spulen 2, 4 eintauchenden, mit dem Gaspedal linear bewegten Tauchanker 6. Abhängig von seinem Eintauch- bzw. Überdeckungsgrad in Bezug zum Magnetfeld der Spulen 2, 4 werden dann unterschiedliche Induktivitäten L der Spulen 2, 4 hervorgerufen.

Im folgenden seien die für das Messprinzip dienenden physikalischen Grundlagen beschrieben. Allgemein erzeugt ein Strom I in einer Zylinderspule 2, 4 ein magnetisches Feld mit einer Feldstärke H:

$$H = I \cdot \frac{n}{l} \qquad (1)$$

wobei n die Windungszahl und I die Spulenlänge ist. Die Feldstärke H erzeugt eine Kraftflussdichte B

$$B = \mu_r \cdot \mu_0 \cdot H \qquad (2)$$

wobei $\mu_0$ die Permeabilität und $\mu_r$ die Permeabilitätszahl ist, wobei für letztere gilt :
$\mu_r$ <1 für diamagnetische Materialien,
$\mu_r$ >1 für paramagnetische Materialien, und
$\mu_r$ >>1 für ferromagnetische Materialien.

Eine Änderung der Kraftflussdichte B induziert in den Spulen 2, 4 eine Spannung $U_{ind}$:

$$U_{ind} = n \cdot \dot{B} \cdot A \qquad (3)$$

Aus den Gleichungen (1) bis (3) ergibt sich dann für die induzierte Spannung $U_{ind}$:

$$U_{ind} = n \cdot A \cdot \mu_r \cdot \mu_0 \cdot \frac{n}{l} \cdot \dot{I} \qquad (4)$$

Für die Induktivität L der Spulen 2, 4 ergibt sich dann:

$$L = n^2 \cdot \mu_r \cdot \mu_0 \cdot \frac{A}{l} \qquad (5)$$

Die Spulen 2, 4 und der Tauchanker 6 sind in Bezug zu einer gemeinsamen Spulenachse 12 koaxial angeordnet. Die beispielsweise zylindrischen Spulen 2, 4 besitzen vorzugsweise eigene Spulenkörper 14, 16 auf welchen je eine Spulenwicklung 18, 20 aus elektrisch leitfähigem Draht, beispielsweise aus Kupferdraht aufgewickelt ist sowie elektrische Anschlüsse. Der Tauchanker 6 ist ebenfalls zylindrisch und insbesondere derart ausgebildet, dass die Induktivität L der Spulen 2, 4 eine lineare Abhängigkeit von der Eintauchtiefe des Tauchankers 6 in die zylindrischen Spulenöffnungen 8, 10 aufweist.

Gemäß der Ausführungsform von Fig.1 besteht ein radial äußerer Abschnitt 22 des Tauchankers 6 wenigstens teilweise aus einem ferromagnetischen Material und ein weiterer Abschnitt 24 des Tauchankers 6 wenigstens teilweise aus einem elektrisch leitfähigen Nichteisenmetall. Besonders bevorzugt wird der radial äußere Abschnitt 22 des Tauchankers 6 durch wenigstens einen Ring gebildet, welcher einen Längsabschnitt einer radial äußeren Umfangsfläche des Tauchankers 6 darstellt.

Dabei erstreckt sich der weitere Abschnitt 24 in axialer Richtung wenigstens über den gesamten, mit den Spulen zusammenwirkenden Bereich des Tauchankers 6 und die Länge des radial äußeren Rings 22 des Tauchankers 6 ist derart gewählt, dass Stellungen des Tauchankers 6 wie in Fig.1 gezeigt existieren, in welchen der Ring 22 des Tauchankers 6 sich mit der gesamten axialen Länge der Spulenöffnung 8 der einen Spule 2, jedoch noch nicht oder nur teilweise mit der axialen Länge der Spulenöffnung 10 der anderen Spule 4 überdeckt.

Unter dem gesamten, in axialer Richtung mit den Spulen 2, 4 zusammenwirkenden Bereich des Tauchankers 6, welcher dessen weiteren Abschnitt 24 darstellt, ist der axiale Abschnitt des Tauchankers 6 zu verstehen, in welchem abhängig von den möglichen Axialpositionen des Tauchankers die Induktivitäten L der Spulen 2, 4 beeinflusst werden können.

Zu den Nichteisenmetallen zählen beispielsweise Aluminium, Kupfer, Gold, Silber etc. Sie zeichnen sich allgemein durch eine hohe elektrische Leitfähigkeit aus.

Unter einem ferromagnetischen Material wird allgemein ein magnetisch leitfähiges oder weich-magnetisches Material verstanden, welches eine Permeabilitätszahl $\mu \gg 1$ und eine magnetische Suszeptibilität $\chi > 0$ aufweist. Zu den ferromagnetischen Materialien zählen beispielsweise Eisen, Kobalt oder Nickel. Sie stärken das sie durchdringende magnetische Feld erheblich, indem sie den magnetischen Widerstand verringern.

Besonders bevorzugt ist das Nichteisenmetall im weiteren Abschnitt 24 des Tauchankers 6 paramagnetisch oder diamagnetisch, bei gleichzeitig hoher elektrischer Leitfähigkeit, um möglichst hohe Wirbelströme und damit ein möglichst großes magnetisches Gegenfeld zu erzeugen, das dem Magnetfeld der Spulen 2, 4 entgegen wirkt.

Unter einem paramagnetischen Material wird ein Material verstanden, das eine Permeabilitätszahl $\mu > 1$ und eine magnetische Suszeptibilität $\chi > 0$ aufweist. Zu einem solchen paramagnetischen Material zählen beispielsweise Platin oder Aluminium.

Unter einem diamagnetischen Material wird ein Material verstanden, das eine Permeabilitätszahl $\mu < 1$ und eine magnetische Suszeptibilität $\chi < 0$ aufweist. Zu einem solchen diamagnetischen Material zählen beispielsweise Kupfer oder Silber.

Bevorzugt wird das Nichteisenmetall durch Aluminium oder durch eine Aluminiumlegierung gebildet oder enthält diese Materialien.

Durch eine zu sensierende lineare Bewegung des Tauchankers 6 in Bezug zu den Spulen 2, 4 verändert sich dessen Eindringtiefe in deren Spulenöffnungen 8, 10 bzw. in die von den Spulen 2, 4 erzeugten Magnetfelder. Diese Veränderung der Eindringtiefe oder der Überlagerungsfläche mit den Spulenöffnungen 8, 10 verändert die Eigeninduktivitäten L der Spulen 2, 4, was zur Signalgewinnung genutzt wird.

Die Erregung der Spulen 2, 4 kann beispielsweise durch einen Mikroprozessor erfolgen, welcher rechteckförmige, sinusförmige oder beliebige Impulse einer Wechselspannungsquelle in die Spulen 2, 4 einspeist. Aus der Dauer des Abklingens des Impulses auf einen unteren Grenzwert können dann die Eigeninduktivitäten L der Spulen 2, 4 bestimmt werden. In diesem Fall wird die Linearbewegung des Tauchankers 6 relativ zu den Spulen 2, 4 mittels einer Zeitmessung bestimmt.

Die Signalgewinnung erfolgt nach dem beispielsweise aus dem eingangs erwähnten Taschenbuch der Messtechnik, Carl Hanser Verlag 1998, Kapitel 3.8.1.2 bekannten Differenzialprinzip. Dabei werden die Spulen 2, 4 des Differenzialtauchankeraufnehmers in einer Differenzialanordnung verschaltet, um Störgrößen zu kompensieren. Eine Messgrößenänderung in Form einer Änderung der jeweiligen Spuleninduktivität L wirkt sich dabei gegensinnig aus, d.h. in den Spulen 2, 4 werden abhängig von der Eintauchtiefe des Tauchankers 6 in die jeweilige Spulenöffnung 8, 10 gegenläufige Induktivitätsänderungen erzeugt.

Weiterhin können die Spulen 2, 4 separat oder zueinander in Reihe geschaltet und von einer oder mehreren Stromquellen gegensinnig oder gleichsinnig bestromt sein, so dass sie zumindest in ihren zugeordneten Spulenöffnungen 8, 10 gegensinnige oder gleichsinnige Magnetfelder erzeugen, d.h. dass die Richtung der Magnetfeldlinien der Spulen 2, 4 wenigstens im Bereich der Spulenöffnungen gleichsinnig bzw. gleichgerichtet oder gegensinnig bzw. entgegengerichtet ist. Die Richtungen der von den Spulen 2, 4 erzeugten Magnetfelder spielen aber wegen der Signalauswertung nach dem Differenzialprinzip letztlich keine Rolle.

Vor diesem Hintergrund ist die Funktionsweise des erfindungsgemäßen Tauchankeraufnehmers 1 gemäß der Ausführungsform von Fig.1 wie folgt :

Wenn sich der aus dem ferromagnetischen Material bestehende radial äußere Ring 22 des Tauchankers 6 in der Spulenöffnung 8 bzw. im Bereich des Magnetfelds der einen Spule 2, aber noch nicht oder nur teilweise in der Sputenöffnung 10 der anderen Spule 4 befindet, so verstärkt dieser äußere ferromagnetische Ring 22 das von der einen Spule 2 erzeugte Magnetfeld, weil dies eine typische Eigenschaft ferromagnetischer Materialien ist, welche die Magnetfeldlinien ablenken und in sich konzentrieren. Insgesamt steigt daher die Eigeninduktivität L der einen Spule 2. Wegen seiner die Magnetfeldlinien der einen Spule 2 konzentrierenden Eigenschaften schirmt der radial äußere ferromagnetische Ring 22 gleichzeitig den weiteren, an dieser Stelle radial inneren, aus elektrisch leitfähigem Nichteisenmetall bestehenden Abschnitt 24 vom Magnetfeld der einen Spule 2 ab, so dass durch das Magnetfeld der einen Spule 2 allenfalls geringe Wirbelströme im Nichteisenmetall 24 erzeugt werden. Diese relativ geringen Wirbelströme können wiederum ein nur geringes, dem Magnetfeld der einen Spule 2 entgegengerichtetes Magnetfeld erzeugen, so dass das durch den radial äußeren ferromagnetischen Ring 22 des Tauchankers verstärkte Magnetfeld der einen Spule 2 dadurch kaum geschwächt werden kann.

Da sich in dieser Stellung des Tauchankers 6 andererseits der radial äußere ferromagnetische Ring 22 des Tauchankers 6 noch nicht bzw. nur teilweise in der Spulenöffnung 10 bzw. im Bereich des Magnetfelds der anderen Spule 4 befindet, jedoch der weitere Abschnitt 24 aus Nichteisenmetall, kann der radial äußere Ring 22 den weiteren Abschnitt 24 aus Nichteisenmetall nicht vom Magnetfeld der anderen Spule 4 abschirmen. Daher sorgen die durch das Magnetfeld der anderen Spule 4 im Nichteisenmetall induzierten Wirbelströme für die Ausbildung eines dem Magnetfeld der anderen Spule 4 entgegengerichteten Magnetfelds, welches das Magnetfeld der anderen Spule 4 schwächt.

Wird der Tauchanker 6 in Fig.1 durch eine Betätigung des Gaspedals so weit nach links verschoben, dass die radial innere Umfangsfläche der Spulenöffnung 10 der anderen Spule 4 sich vollständig mit dem radial äußeren Ring 22 des Tauchankers 6 überdeckt, andererseits aber der radial äußere Ring 22 aus der Spulenöffnung 8 der einen Spule 2 wenigstens teilweise ausgetreten ist, so kehren sich die Verhältnisse um, d.h. dass nun das Magnetfeld der anderen Spule 4 gestärkt und dasjenige der einen Spule 2 geschwächt wird, so dass wiederum eine relativ große Differenz der Eigeninduktivitäten L der beiden Spulen 2, 4 entsteht.

Gemäß der Ausführungsform von Fig.2, in welcher gleiche oder gleich wirkenden Bauelemente die gleichen Bezugszahlen wie in Fig.1 aufweisen, besteht der radial äußere Abschnitt des Tauchankers 6 wiederum bevorzugt in Form eines Rings 22 wenigstens teilweise aus einem elektrisch leitfähigen Nichteisenmetall und der weitere Abschnitt 24 des Tauchankers 6 wenigstens teilweise aus einem ferromagnetischen Material.

Wie dem Ausführungsbeispiel von Fig.1 erstreckt sich der weitere Abschnitt 24 des Tauchankers 6 in axialer Richtung wenigstens über den gesamten, mit den Spulen 2, 4 zusammenwirkenden Bereich und die Länge des radial äußeren Rings 22 des Tauchankers 6 ist derart gewählt, dass Stellungen des Tauchankers 6 wie die in Fig.2 gezeigt existieren, in welchen der radial äußere Ring 22 sich mit der gesamten Länge der Spulenöffnung 8 der einen Spule 2, jedoch noch nicht oder nur teilweise mit der Länge der Spulenöffnung 10 der anderen Spule 4 überdeckt.

Vor diesem Hintergrund ist die Funktionsweise des erfindungsgemäßen Tauchankeraufnehmers 1 gemäß Fig. 2 wie folgt :

Wenn sich der aus dem elektrisch leitfähigen Nichteisenmetall bestehende radial äußere Ring 22 des Tauchankers 6 in der Spulenöffnung 8 bzw. im Bereich des Magnetfelds der einen Spule 2, aber noch nicht oder nur teilweise in der Spulenöffnung 10 der anderen Spule 4 befindet, so schwächt dieser äußere Ring 22 aus Nichteisenmetall das von der einen Spule 2 erzeugte Magnetfeld, weil dies eine typische Eigenschaft von Nichteisenmetallen mit hoher elektrischer Leitfähigkeit ist, in welchen durch das Magnetfeld der einen Spule 2 bedingt Wirbelströme für die Ausbildung eines dem Magnetfeld der einen Spule 2 entgegen gerichteten Magnetfelds induziert werden, welches das Magnetfeld der einen Spule 2 schwächt. Insgesamt sinkt daher die Eigeninduktivität L der einen Spule 2.

Da sich in dieser Stellung des Tauchankers 6 andererseits der radial äußere Ring 22 aus Nichteisenmetall noch nicht bzw. nur teilweise in der Spulenöffnung 10 bzw. im Bereich des Magnetfelds der anderen Spule 4 befindet, jedoch der weitere Abschnitt 24 aus ferromagnetischem Material, kann der radial äußere Ring 22 aus Nichteisenmetall das Magnetfeld der anderen Spule 4 nicht schwächen. Hingegen verstärkt der sich in der Spulenöffnung 10 der anderen Spule 4 befindliche weitere Abschnitt 24 aus ferromagnetischem Material das Magnetfeld der anderen Spule 4.

Wird der Tauchanker 6 in Fig.2 so weit nach links verschoben, dass die radial innere Umfangsfläche der Spulenöffnung 10 der anderen Spule 4 sich vollständig mit dem radial äußeren Ring 22 des Tauchankers 6 überdeckt, andererseits aber der radial äußere Ring 22 aus der Spulenöffnung 8 der einen Spule 2 wenigstens teilweise ausgetreten ist, so kehren sich die Verhältnisse um, d.h. dass nun das Magnetfeld der anderen Spule 4 geschwächt und dasjenige der einen Spule 2 gestärkt wird, so dass wiederum eine relativ große Differenz der Eigeninduktivitäten L der beiden Spulen 2, 4 entsteht.

Somit wird bei der Ausführungsform von Fig.2 in ein und derselben Stellung des Tauchankers 6 das Magnetfeld der einen Spule 2 geschwächt und dasjenige der anderen Spule 4 gestärkt bzw. umgekehrt, so dass sich auch hier eine relativ große Differenz der Eigeninduktivitäten L der Spulen 2, 4 ergibt, was letztlich in vorteilhafter Weise zu einer höheren Empfindlichkeit und Auflösung des erfindungsgemäßen Differenzialtauchankeraufnehmers 1 führt.

Bezugszeichenliste

| | |
|---|---|
| 1 | Differenzialtauchankeraufnehmer |
| 2 | Spule |
| 4 | Spule |
| 6 | Tauchanker |
| 8 | Spulenöffnung |
| 10 | Spulenöffnung |
| 12 | Spulenachse |
| 14 | Spulenkörper |
| 16 | Spulenkörper |
| 18 | Spulenwicklung |
| 20 | Spulenwicklung |
| 22 | radial äußerer Abschnitt |
| 24 | weiterer Abschnitt |

**Patentansprüche**

1. Differenzialtauchankeraufnehmer (1) beinhaltend wenigstens zwei elektrische, mit Windungen versehene Spulen (2, 4) sowie wenigstens einen mit diesen zusammenwirkenden Tauchanker (6), welcher abhängig von seiner Eintauchtiefe in koaxiale Spulenöffnungen (8, 10) der Spulen (2, 4) eine unterschiedliche Induktivität (L) der Spulen (2, 4) hervorruft, **dadurch gekennzeichnet, dass**

   a) ein radial äußerer Abschnitt (22) des Tauchankers (6) wenigstens teilweise aus einem ferromagnetischen Material und ein weiterer Abschnitt (24) des Tauchankers (6) wenigstens teilweise aus einem elektrisch leitfähigen Nichteisenmetall besteht, oder dass
   b) ein radial äußerer Abschnitt (22) des Tauchankers (6) wenigstens teilweise aus einem elektrisch leitfähigen Nichteisenmetall und ein weiterer Abschnitt (22) des Tauchankers (6) wenigstens teilweise aus einem ferromagnetischen Material besteht, wobei
   c) sich der weitere Abschnitt (24) in axialer Richtung wenigstens über den gesamten, mit den Spulen (2, 4) zusammenwirkenden Bereich des Tauchankers (6) erstreckt und die axiale Länge des radial äußeren Abschnitts (22) des Tauchankers (6) derart gewählt ist, dass Stellungen des Tauchankers (6) existieren, in welchen der radial äußere Abschnitt (22) des Tauchankers (6) sich mit der gesamten axialen Länge der Spulenöffnung (8) der einen Spule (2), jedoch noch nicht oder nur teilweise mit der axialen Länge der Spulenöffnung (10) der anderen Spule (4) überdeckt.

2. Differenzialtauchankeraufnehmer nach Anspruch 1, **dadurch gekennzeichnet, dass** das Nichteisenmetall paramagnetisch oder diamagnetisch ist.

3. Differenzialtauchankeraufnehmer nach Anspruch 2, **dadurch gekennzeichnet, dass** das Nichteisenmetall durch Aluminium oder durch eine Aluminiumlegierung gebildet wird.

4. Differenzialtauchankeraufnehmer nach wenigstens einem der vorhergehenden Ansprüche, **dadurch gekennzeichnet, dass** der radial äußere Abschnitt (22) durch wenigstens einen Ring gebildet wird, welcher einen Längsabschnitt einer radial äußeren Umfangsfläche des Tauchankers (6) ausbildet.

5. Differenzialtauchankeraufnehmer nach wenigstens einem der vorhergehenden Ansprüche, **dadurch gekennzeichnet, dass** die Spulen (2, 4) separat oder zueinander in Reihe geschaltet und von einer oder mehreren Stromquellen gegensinnig oder gleichsinnig bestromt sind.

6. Differenzialtauchankeraufnehmer nach wenigstens einem der vorhergehenden Ansprüche, **dadurch gekennzeichnet, dass** der radial äußere Abschnitt (22) vollständig aus dem Nichteisenmetall oder dem ferromagnetischen Material und der weitere Abschnitt (24) vollständig aus dem Nichteisenmetall oder dem ferromagnetischen Material besteht.

7. Differenzialtauchankeraufnehmer nach wenigstens einem der vorhergehenden Ansprüche, **dadurch gekennzeichnet, dass** der weitere Abschnitt (24) einen bezogen auf den radial äußeren Abschnitt (22) restlichen Abschnitt des Tauchankers (6) ausbildet.

Fig.1:

Fig.2:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Taschenbuch der Messtechnik. Carl Hanser Verlag, 1998